# EUROPEAN PATENT APPLICATION

(11) **EP 3 261 191 A1**
(43) Date of publication of application: **27.12.2017**
(21) Application number: 17177451.6
(22) Date of filing: 22.06.2017
(51) Int. Cl.: H01R 13/52

(54) **ELECTRICAL CONNECTOR**

(30) Priority: 24.06.2016 JP 2016125745
(71) Applicant: Tyco Electronics Japan G.K., Kawasaki-shi, Kanagawa 213-8535 (JP); TOYOTA JIDOSHA KABUSHIKI KAISHA, Toyota-shi, Aichi 471-8571 (JP)
(72) Inventor: Matsumoto, Tsugumi, Kawasaki-shi, Kanagawa 213-8535 (JP); Komiyama, Ryuichi, Kawasaki-shi, Kanagawa 213-8535 (JP); Funayama, Tomoyuki, Toyota-shi, Aichi 471-8571 (JP)
(74) Representative: Johnstone, Douglas Ian

(57) **Abstract**

An electrical connector(10)capable of improving a drainage performance at a side of the electrical connector(10). The electrical connector(10)includes: a housing(11)including a hood(13)provided with a receiving space(19)for receiving a mating connector(30); and a contact(29)held by the housing(11) In the electrical connector(10), in a usage state in which the electrical connector(10) is mated with the mating connector(30), the hood(13)includes: a pair of first inner surfaces(21) facing the receiving space(19)and being spaced apart in a horizontal direction; and a pair of second inner surfaces (23)facing the receiving space(19)and being spaced apart in a vertical direction. Each of the pair of inner surfaces includes an inclined surface(T1,T3)extending over a predetermined range of a distance from a front end of the hood(13)to a back thereof.

## Description

### BACKGROUND OF THE INVENTION

### Field of the Invention

The present invention relates to an electrical connector, and more particularly, to an electrical connector having a light waterproofing or splash-proof performance.

### Description of Related Art

In an electrical connector, a member called a rubber seal ring that is separate from a housing is interposed between, for example, a male housing and a female housing, so as to prevent water from entering the electrical connector.

Instead of using the seal ring, a technique for providing the housing with an inclined surface so as to discharge water which has entered a connector has been proposed. For example, JP2011-150895A proposes a technique in which an inclined surface is formed at an inner surface of a case so that water that has entered a gap between the case and the connector flows toward an opening. JP2011-150895A discloses that a groove is formed toward the opening in the inclined surface and the capillary action due to the groove enhances the drainage performance.

The inclined surface disclosed in JP2011-150895A is provided between the case and the connector so as to discharge the water which has entered the connector. However, the inclined surface cannot prevent the water from entering the connector. That is, it is understood that the structure disclosed in JP2011-150895A includes a seal ring, which allows water to enter until the water reaches the position of the seal ring.

The provision of the seal ring is advantageous in terms of waterproof, but has a problem that, for example, the number of components increases. Accordingly, in the electrical connector that is placed at a position where water is less likely to fall, there is no need to provide a seal ring and it is sufficient to ensure a certain level of waterproof performance, or a light waterproof performance.

In general, water falls onto an upper part of an electrical connector in the vertical direction. Accordingly, the water received on the upper part of the electrical connector runs through a side part of the electrical connector along the vertical direction and reaches a lower part thereof. In other words, the water received in the upper part spreads in the gap between the case and the connector, enters the case, which needs to be protected against water, and reaches a side part of the case. Also in this side part, the water spreads in the gap between the case and the connector, so that the water may reach an innermost part of the case which needs to be protected against water.

In view of the above-mentioned circumstances, an object of the present invention is to provide an electrical connector capable of improving a drainage performance at a side part of the electrical connector.

### SUMMARY OF THE INVENTION

An electrical connector according to the present invention includes a housing including a hood provided with a receiving space for receiving a mating connector, and a contact held by the housing.

In a usage state in which the electrical connector is mated with the mating housing, the hood according to the present invention includes: a pair of first inner surfaces extending along a vertical direction, the pair of first inner surfaces facing the receiving space and being provided at an interval in a horizontal direction; and a pair of second inner surfaces extending along the horizontal direction, the pair of second inner surfaces facing the receiving space and being provided at an interval in the vertical direction.

Each of the pair of first inner surfaces according to the present invention includes a first inclined surface in a predetermined range from a front end of the hood to a back thereof.

In the electrical connector according to the present invention, the first inner surfaces extending along the vertical direction in the usage state are each provided with the first inclined surface, and the water which has reached the first inclined surfaces is guided downward in the vertical direction along the first inclined surfaces due to gravity, so that a high drainage performance can be obtained at a side part of the electrical connector.

The first inclined surfaces according to the present invention may be provided only in a part of the first inner surface in the vertical direction, but is preferably provided in an entire region thereof. With this structure, a drainage path is widened, which leads to an improvement in the drainage performance of the first inclined surface.

In the electrical connector according to the present invention, one or both of the pair of second inner surfaces preferably includes a second inclined surface in a predetermined range from the front end to the back of the hood.

The second inner surfaces are respectively disposed at an upper side and a lower side in the vertical direction. The second inclined surface of the upper second inner surface has a function of discharging dropped water before running toward the back. The second inclined surface of the lower second inner surface has a function of discharging the water running down the first inclined surface. Thus, the second inclined surface is provided in addition to the first inclined surface, thereby achieving a higher drainage performance.

The second inclined surfaces according to the present invention may be provided only in a part of the second inner surface in the horizontal direction, but is preferably provided in an entire region thereof. With this structure, the drainage path is widened, which leads to an improvement in the drainage performance of the second inclined surface.

The electrical connector according to the present invention preferably has a structure in which the first inclined surface is provided in an entire region of each of the first inner surfaces in the vertical direction and the second inclined surface is provided in an entire region of each of the second inner surfaces in the horizontal direction, which allows ends of the first inclined surfaces to be connected to ends of the second inclined surfaces.

When the ends of the first inclined surfaces are connected to the ends of the second inclined surfaces, the second inclined surface of the upper second inner surface can guide the water running down the second inclined surface to the first inclined surfaces. The second inclined surface of the lower second inner surface can guide the water running down the first inclined surfaces to the second inclined surface. That is, according to the present invention in which the ends of the first inclined surfaces are connected to the ends of the second inclined surfaces, the first inclined surfaces and the second inclined surfaces work together so that water can be discharged. Therefore, a higher drainage performance can be achieved.

In the electrical connector according to the present invention, a lower one of the pair of second inner surfaces in the vertical direction preferably includes a through-hole which is formed adjacent to the second inclined surface and disposed at the back of the hood relative to the second inclined surface. The provision of the through-hole allows the water in contact with a projection which is an end of the second inclined surface adjacent to the through-hole to be guided so as to pass through the projection and the through-hole and to be reliably discharged to the outside of the housing.

The electrical connector according to the present invention allows the water which falls onto an upper part of the electrical connector and is about to enter the hood from a side part thereof to be guided downward in the vertical direction along the first inclined surfaces due to gravity, so that a high drainage performance can be obtained.

The invention also provides an electrical connector assembly comprising the electrical connector in combination with the mating connector.

### BRIEF DESCRIPTION OF THE DRAWINGS

FIG. 1 is a perspective view showing an electrical connector according to an embodiment of the present invention;
FIG. 2 is a perspective view showing the electrical connector of the embodiment as viewed along a direction different from that of FIG. 1;
FIG. 3 is a sectional view taken along a line III-III of FIG. 1;
FIG. 4A and FIG. 4B each show the electrical connector according to the embodiment, FIG. 4A being a side view, and FIG. 4B being a sectional view taken along a line IVb-IVb of FIG. 1;
FIG. 5A and FIG. 5B are views for explaining an advantageous effect of an inclined surface according to this embodiment, FIG. 5A being a plan sectional view of the electrical connector, and FIG. 5B being a partially cut-away perspective view of the electrical connector;
FIG. 6A and FIG. 6B are views for explaining an advantageous effect of the inclined surface according to the embodiment, FIG. 6A being a plan sectional view, and FIG. 6B being a side sectional view;
FIGS. 7A and 7B are front views for explaining an advantageous effect of the inclined surface according to the embodiment; and
FIG. 8 is a sectional view showing an electrical connector according to a preferred embodiment.

### DETAILED DESCRIPTION OF THE PREFERRED EMBODIMENTS

Embodiments of the present invention will be described below with reference to the accompanying drawings.

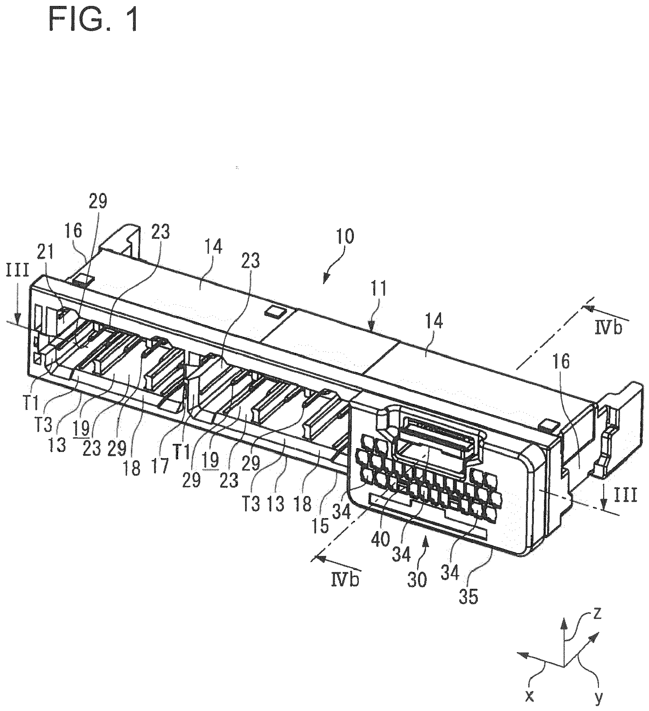

As shown in FIGS. 1 to 3, an electrical connector 10 according to an embodiment of the present invention comprises a receptacle connector that is used in such a manner that, for example, the receptacle connector is fixed to a printed wiring board (not shown), and is mated to a counterpart connector 30 which comprises a plug connector. The electrical connector 10 according to this embodiment is mated with, for example, three mating connectors 30 which are aligned in one direction. Note that FIGS. 1 to 3 show only one mating connector 30.

The electrical connector 10 includes a housing 11 and contacts 29. The housing 11 is integrally formed of resin having an electrical insulation. The contacts 29 are formed of a material having high conductivity, such as a copper-based material. The materials of the housing 11 and the contacts 29 are the same as those of the mating connector 30.

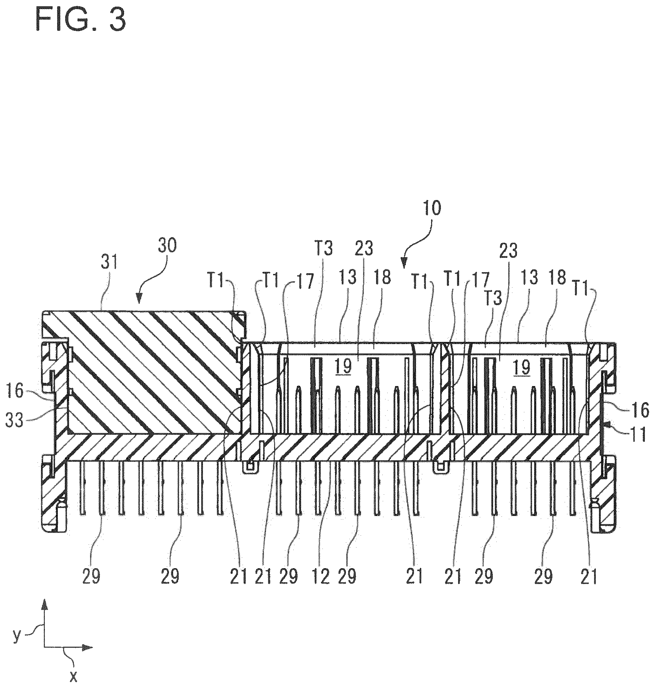

As shown in FIG. 3, the housing 11 is provided with a holding wall 12 that holds the plurality of contacts 29 in a state where the contacts 29 are disposed at intervals. On one surface of the holding wall 12, a hood 13 configured to be mated to the mating connector 30 is formed. The hood 13 is a cylindrical member projecting to one side from the holding wall 12, and is provided with an insertion opening 18 which is an opening of the hood 13 and is opposed to the holding wall 12.
The hood 13 is provided with a receiving space 19 that receives the mating connector 30 and is formed between the holding wall 12 and the insertion opening 18. In this embodiment, the hood 13 is partitioned into three hoods by partition walls 17, and the mating connector 30 is inserted into the receiving spaces 19 respectively corresponding to these three hoods 13.

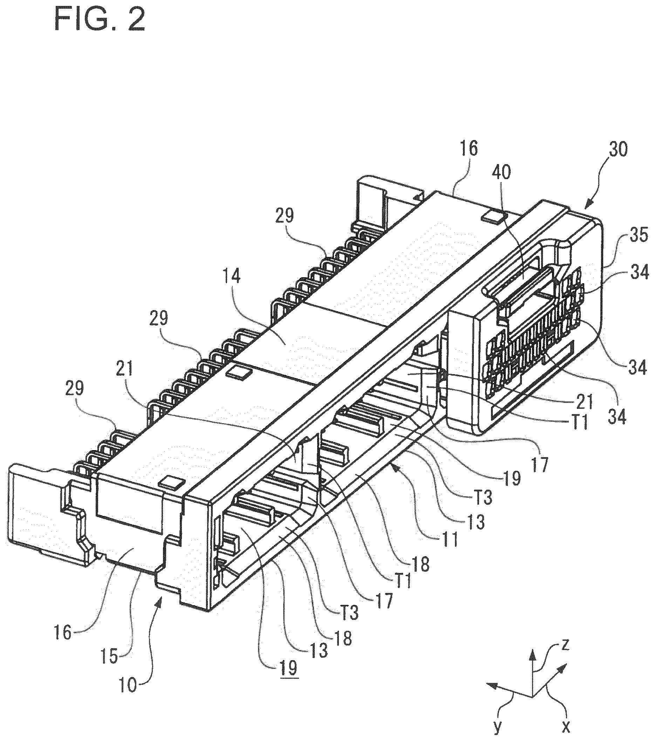

As shown in FIGS. 1 to 3, a part of each of the contacts 29 held by the holding wall 12 that is configured to be electrically connected to a contact of the mating connector 30 extends to the receiving space 19, and another part of each of the contacts 29 that is configured to be connected to the printed wiring board is drawn out or extends backwardly from the holding wall 12. As shown in FIG. 2, the part of each of the contacts 29 that extends backwardly is bent by 90 degrees in the middle of the contact. The contacts 29 are disposed in a plurality of rows in a width direction x and are disposed in a plurality of columns in a height direction z.

Note that in each of the electrical connector 10 and the mating connector 30, a side where the electrical connector 10 and the mating connector 30 are mated is defined as a front side and a side opposite to the front side is defined as a rear side.

The hood 13 includes an upper wall 14, a lower wall 15, and a pair of side walls 16. The upper wall 14 and the lower wall 15 extend in the width direction x and are opposed to each other at a predetermined interval in the vertical direction. The side walls 16 respectively connect, in the height direction z, both ends of each of the upper wall 14 and the lower wall 15 in the width direction x. The hood 13 connects the upper wall 14 and the lower wall 15 in the height direction z at positions where the above-mentioned partition walls 17 partition the width direction x into three parts. The side walls 16 and the partition walls 17 are disposed at predetermined intervals in the horizontal direction.

Note that in a usage state in which the electrical connector 10 is mated with the mating connector 30, the electrical connector 10 according to this embodiment is disposed in such a manner that the height direction z matches the vertical direction, i.e., as shown in FIGS. 1 and 2, and is connected to the printed wiring board, the illustration of which is omitted.

As shown in FIGS. 1 to 3, the hood 13 is provided with an inclined surface (first inclined surface) T1 formed at the front end of the inner surface (first inner surface) 21 of each of the side wall 16 and the partition wall 17 facing the receiving space 19. This inclined surface T1 is formed in such a manner that the inclined surface T1 is inclined from the front toward the rear and the thickness of each of the side wall 16 and the partition wall 17 continuously increases. The inclined surface T1 is formed in a predetermined range from the front end of the hood 13 to the rear thereof. The inclined surface T1 is provided in an entire region in the height direction z of the inner surface 21, i.e., in the vertical direction in the usage state. Note that the inclined surface T1 formed on the side wall 16 and the inclined surface T1 formed on the partition wall 17 adjacent to the side wall 16 comprises a tapered surface.

The side wall 16 and the partition wall 17 are disposed along the height direction z, i.e., the vertical direction. Accordingly, the inclined surfaces T1 that are provided on the side wall 16 and the partition wall 17, respectively, form a drainage path for guiding the water in the vertical direction between a housing 31 of the mating connector 30 and the inclined surfaces. The drainage function of the inclined surfaces T1 will be described in detail later.

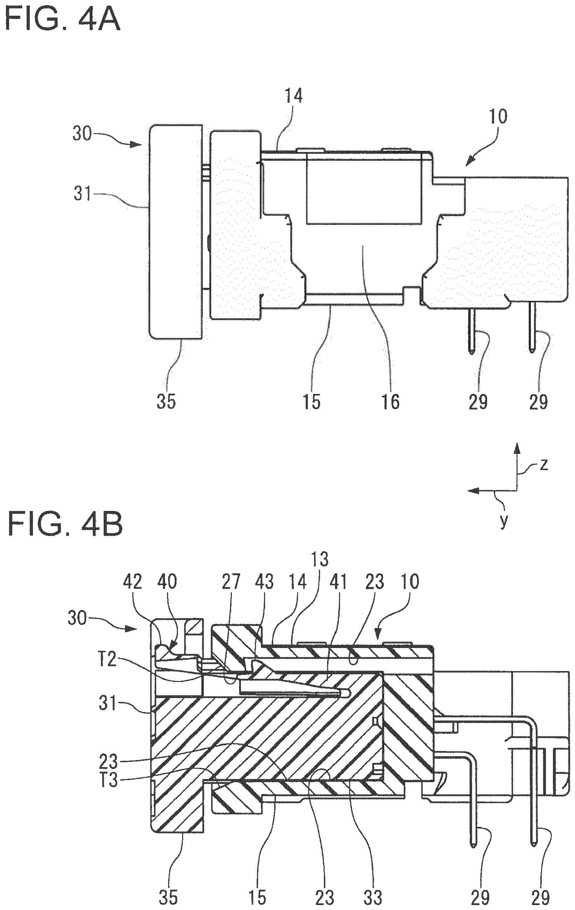

As shown in FIGS. 1, 2, and 4B, the hood 13 is also provided with inclined surfaces T2 and T3 formed at the front end of the inner surface (second inner surface) 23 of each of the upper wall 14 and the lower wall 15 facing the receiving space 19. The inclined surfaces (second inclined surfaces) T2 and T3 are also formed in such a manner that the inclined surfaces are inclined from the front to the rear so that the thickness of each of the upper wall 14 and the lower wall 15 continuously increases. Further, the inclined surfaces T2 and T3 are provided in the entire region of the inner surface 23 in the width direction x, i.e., the horizontal direction in the usage state, so that ends of the inclined surface T1 is connected to an end of each of the inclined surfaces T2 and T3. The inclined surfaces T2 and T3, which are provided on the upper wall 14 and the lower wall 15, respectively, form drainage paths between the housing 31 of the mating connector 30 and the inclined surfaces T2, T3. The upper wall 14 and the lower wall 15, which are formed along the horizontal direction, have a drainage function different from that of the inclined surface T1 of the side wall 16 and the partition wall 17. The drainage function of the inclined surfaces T2 and T3 will be described later.

Next, the mating connector 30 will be described.

As shown in FIG. 1 to 4B, the mating connector 30 includes a housing 31, and a contact (not shown) which is held by the housing 31. The housing 31 holds a number of contacts corresponding to the number of contacts 29, which are held by the electrical connector 10, at positions corresponding to those of the contacts 29.

The housing 31 includes a housing body 33 that holds the contacts, a rear end wall 35 provided at a rear end of the housing body 33, and a lock arm 40 that allows the mating connector 30 and the electrical connector 10 to be locked to each other.

As shown in FIGS. 1 and 2, the housing body 33 is provided with a plurality of contact accommodating holes 34. The contacts (not shown) are respectively inserted into the contact accommodating holes 34. The contact accommodating holes 34 are formed so as to penetrate through the rear end wall 35.

The lock arm 40 is formed integrally with housing body 33. A front end of the lock arm 40 forms a support end 41 that communicates with the housing body 33, and a rear end of the lock arm 40 forms an operation end 42 that operates when the lock arm 40 is pressed. The lock arm 40 includes a lock projection 43 between the support end 41 and the operation end 42. The lock projection 43 and a lock projection 27 formed on the inner surface of the hood 13 are locked to each other, thereby preventing the mating connector 30 from being removed from the electrical connector 10 from the state where the electrical connector 10 and the mating connector 30 are mated together.

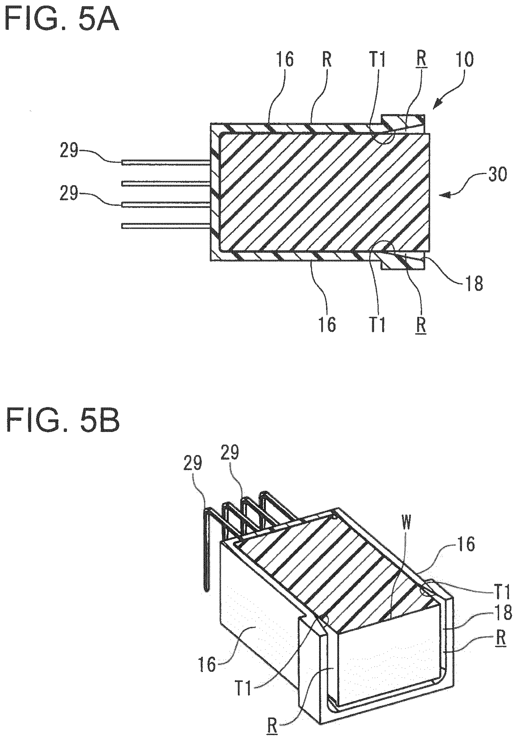

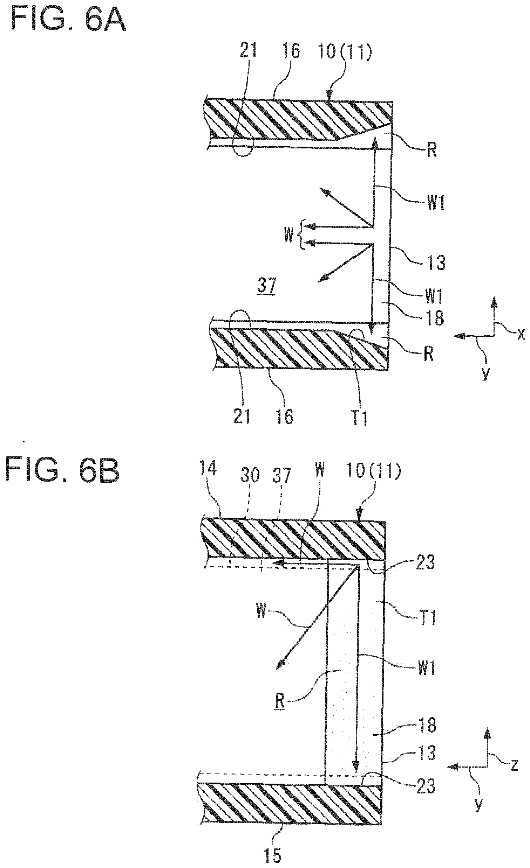

Next, the drainage function of the inclined surface T1 that is provided on the hood 13 of the electrical connector 10 will be described with reference to FIGS. 5A and 5B and FIGS. 6A and 6B. Note that FIGS. 5A and 5B and FIGS. 6A and 6B illustrate a part of the hood 13 of each of the electrical connector 10 and the mating connector 30 in a simplified manner for explanation.

As shown in FIGS. 5A and 5B, the inclined surface T1 is formed at the front end of the side wall 16 of the hood 13. When the electrical connector 10 and the mating connector 30 are mated together, a gap having a triangular prism shape is formed due to the presence of the inclined surface T1. As described below, this gap functions as a drainage path R.

As shown in FIGS. 5A and 5B and FIG. 6B, assume that the water W falls onto the insertion opening 18 of the electrical connector 10 from above. As shown in FIG. 6B, the water W enters the gap between the inner surface 23 of the upper wall 14 of the housing 11 and the outer surface 37 of the housing 31 from the insertion opening 18. Since the gap between the inner surface 23 and the outer surface 37 is narrow, the water W advances in the gap between the inner surface 23 and the outer surface 37 in the width direction x and a mating direction y as shown in FIG. 6A. The water W which has advanced in the width direction x reaches both ends where the inclined surfaces T1 are provided. The water W which has reached the both ends is classified broadly into water that advances in the horizontal direction toward the back of the side wall 16, and water that advances in the vertical direction toward the lower side of the side wall 16. However, since the inclined surface T1 is provided on the side wall 16, as shown in FIG. 6B, the water W preferentially flows downward in the vertical direction along the inclined surface T1 due to gravity, rather than flowing toward the back of the side wall 16. While the side wall 16 has been described, the same holds true of the partition wall 17 provided with the inclined surface T1.

Since the inclined surface T1 reaches the inner surface 23 of the upper wall 14, which is located at a highest position, in the height direction z, the water W which has reached the both ends of the outer surface 37 in the width direction x preferentially flows toward the inclined surface T1, rather than flowing toward the back of the side wall 16.

Further, since the inclined surface T1 reaches the inner surface 23 of the lower wall 15, which is located at a lowest position, in the height direction z, the water W that falls down along the inclined surface T1 may be discharged from the insertion opening 18 to the outside of the housing.

As described above, in the electrical connector 10, the inclined surface T1 is provided on each of the side wall 16 and the partition wall 17 along the vertical direction in the usage state, which allows the water W which has entered from the insertion opening 18 between the housing 11 and the housing 31 to be preferentially guided toward the lower side in the vertical direction and discharged to the outside of the housing, while suppressing the flow of the water toward the back of the hood 13.

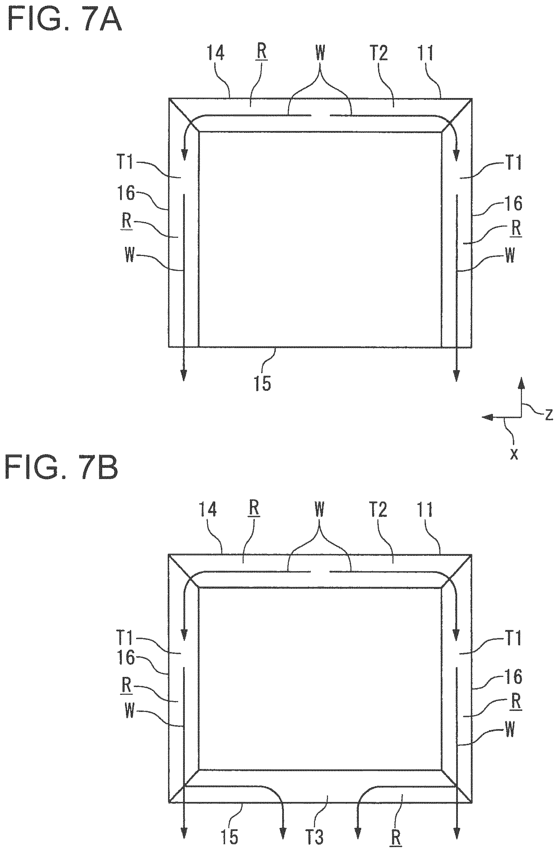

As shown in FIG. 7A, in the electrical connector 10, the upper wall 14 is also provided with the inclined surface T2. The inclined surface T1 is provided in the entire region of the inner surface 21 in the vertical direction, and the inclined surface T2 is provided in the entire region of the inner surface 23 in the horizontal direction, so that an end of the inclined surface T1 and an end of the inclined surface T2 are connected.

Accordingly, as shown in FIG. 7A, on the upper wall 14, the water W flows toward both ends of the inclined surface T2 in the width direction x, rather than flowing to the back, and reaches the inclined surface T1 formed on the side wall 16 (or the partition wall 17). Specifically, it can be said that the drainage path R formed by the inclined surface T2 functions as a guide for carrying the water W toward the drainage path R formed by the inclined surface T1.

As shown in FIG. 7B, in the electrical connector 10, the lower wall 15 is also provided with the inclined surface T3. Further, the inclined surface T3 is provided in an entire region of the inner surface 23 in the horizontal direction, so that an end of the inclined surface T1 is connected to an end of the inclined surface T3.

Accordingly, as shown in FIG. 7B, when the water W flowing to the lower end along the inclined surface T1 reaches the inclined surface T3 at both ends thereof in the width direction x, the water W may flow along the drainage path R formed by the inclined surface T3 toward the center in the width direction x. Since the inclined surface T3 is inclined downward from the back toward the front side, when the water W flows in accordance with the inclination of the inclined surface T3, the water is discharged from the insertion opening 18 to the outside of the housing.

As described above, not only the inclined surface T1, but also one or both of the inclined surface T2 and the inclined surface T3 is (are) provided, thereby making it possible to improve the drainage performance.

The present invention is not limited to the above embodiments. The structures illustrated in the above embodiments may be selected or omitted, or may be modified as appropriate to other structures without departing from the scope of the present invention.

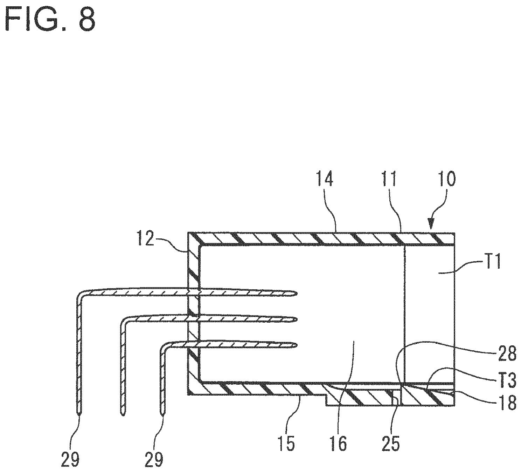

For example, as shown in FIG.8, a hole 25 that is adjacent to a projection 28, which is located at an end of the inclined surface T3 of the lower wall 15, and penetrates through the lower wall 15 may be provided.
The hole 25 is provided at the back of the hood 13 relative to the inclined surface T3, and the water W in contact with the projection 28 flows through the projection 28 and the hole 25 and is discharged to the outside of the housing 11.

In the above embodiments, the inclined surface T1 is provided in the entire region in the vertical direction (height direction z) and the inclined surfaces T2 and T3 are provided in the entire region in the horizontal direction. However, the present invention is not limited to this structure. The inclined surface T1 may be provided only in a partial region in the vertical direction and the inclined surfaces T2 and T3 may be provided only in a partial region in the horizontal direction. However, the region is preferably a wide region having a length that is equal to or more than half the length in the vertical direction and a width that is equal to or more than half the width in the horizontal direction.

Angles formed between the inclined surfaces T1, T2, and T3 may be arbitrarily determined as long as a desired effect can be obtained. The angles are preferably in a range from 5° to 25°, and more preferably in a range from 10° to 20°. The length of each of the inclined surfaces T1, T2, and T3 from the front end of the hood 13 toward the back thereof may be arbitrarily determined. The length is preferably in a range from 3 mm to 10 mm, and more preferably in a range from 5 to 8 mm.

The references above to angles of inclination are references to angles between the inclined surfaces and the mating direction.

## Claims

1. An electrical connector(10)comprising:
a housing(11)including a hood(13)provided with a receiving space(19)for receiving a mating connector(30); and
a contact(29)held by the housing(11), wherein
in a usage state in which the electrical connector(10)is mated with the mating connector(30),
the hood(13)includes:
a pair of first inner surfaces(21)extending along a vertical direction, the pair of first inner surfaces(21)facing the receiving space(19)and being provided at an interval in a horizontal direction; and
a pair of second inner surfaces(23)extending along the horizontal direction, the pair of second inner surfaces(23)facing the receiving space(19)and being provided at an interval in the vertical direction, and
each of the pair of first inner surfaces(21)includes a first inclined surface(T1)extending over a predetermined range of a distance from a front end of the hood(13)to a back thereof.

2. The electrical connector(10)according to claim 1, wherein each of the first inclined surfaces(T1)extends over an entirety of the respective first inner surface(21)in the vertical direction.

3. The electrical connector(10)according to claim 1 or claim 2, wherein one or both of the pair of second inner surfaces(23)includes a second inclined surface(T3) extending over a predetermined range of a distance from the front end to the back of the hood(13).

4. The electrical connector(10)according to claim 3, wherein the or each second inclined surface(T3)extends over an entirety of the respective second inner surface(23)in the horizontal direction.

5. The electrical connector(10)according to claim 4, wherein
each of the first inclined surfaces(T1)extends over the entirety of the respective first inner surface(21)in the vertical direction,
the or each second inclined surface extends over the entirety of the respective second inner surface(23)in the horizontal direction, and
ends of the first inclined surfaces(T1)are connected to respective ends of the or each second inclined surface.

6. The electrical connector(10)according to any one of claims 3 to 5, wherein a lower one of the second inner surfaces(23)in the vertical direction includes a through-hole(25)adjacent to the second inclined surface(T3), the through-hole(25)being formed at the back of the hood(13) relative to the second inclined surface(T3).

7. An electrical connector assembly comprising the electrical connector according to any preceding claim in combination with the mating connector(30).
